(19) **Europäisches Patentamt**

**European Patent Office**

**Office européen des brevets**

(11) **EP 1 370 010 A1**

(12) **EUROPEAN PATENT APPLICATION**

(43) Date of publication:
**10.12.2003 Bulletin 2003/50**

(51) Int Cl.$^7$: **H04B 7/005**, H04Q 7/38

(21) Application number: **02253961.3**

(22) Date of filing: **06.06.2002**

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventors: • **Bernhard, Urs Peter** **Nuremberg 90491 (DE)** • **Mueckenheim, Jens** **Nuremberg 90411 (DE)** |
| (71) Applicant: **Lucent Technologies Inc.** **Murray Hill, New Jersey 07974-0636 (US)** | (74) Representative: **Sarup, David Alexander et al** **Lucent Technologies UK Limited,** **5 Mornington Road** **Woodford Green, Essex IG8 OTU (GB)** |

(54) **A method for estimating the radio resource consumed by a service and its application for overload control**

(57) The invention proposes a method for estimating radio resource consumed by a service and its application for overload control provided between nodes and user equipment (UE), particularly in a code-division multiple-access (CDMA) network, comprising the steps of: extracting a first parameter from a common pilot channel (CPiCH) representing the ratio of received energy per chip to the total received power spectral density ($E_C/I_{0\ CPiCH}$) and/or a second parameter representing the transmitted power of the common pilot channel ($P_{CPiCH}$), assigning said first and/or said second parameter to a third parameter such that the third parameter represents the radio resource consumption of the service ($P_i/P_{max}$, $C_i$).

EP 1 370 010 A1

**Description**

BACKGROUND OF THE INVENTION.

1. FIELD OF THE INVENTION.

The invention relates to a method and an apparatus for estimating radio resource consumed by a service provided between nodes and user equipment and its application for overload control.

2. DESCRIPTION OF RELATED ART.

With the coming of a third generation of wireless networks known as Universal Mobile Telecommunication Systems (UMTS) based on code-division multiple-access (CDMA) techniques overload control has become a central part in these networks.

Overload control, so far, tries to avoid overload situations by means of e.g. admission control functionality or overcomes overload situations by means of e.g. congestion control. Furthermore, dynamic scheduling on common channels such as the DSCH (Downlink Shared Channel) can be used for providing overload control in the UMTS network.

Enhanced overload control methods generally take into account the resource that each service consumes for obtaining the information about admitting new users or lowering the offered load in case of congestion.

In a mobile telephone system, communication is effected through a series of nodes e.g. base stations. Each node receives data from several sources e.g. mobile phone and needs to transmit that data onwards. The radio resource capacity for each node is limited by such factors as the available transmission power and code sequence. While each request to the node to transmit data will have a minimum quality of service requirement and resource consumption, respectively, the quality of service and the resources required will vary strongly with time during any particular transmission due to such factors as the speed of a mobile telephone through an environment, and internal or external interference. Therefore, users at the center of the cell consume much less resources than users at the cell edges.

Regarding this effect, especially with respect to overload control, the following problems have been observed in determining the resources a certain service consumes in connection with overload control.

In theory the transmit power, dedicated to the connection, is the right measure for the resource consumption in the downlink. However, the following problems occur: Firstly, a separate (additional) measurement in the BTS (base transceiver station) is necessary with signaling the results from the BTS towards the RNC (radio network controller). Considering the number of simultaneous connections that are supported in UMTS, this results in a high amount of signalling over the Iub interface between BTS and RNC. Secondly, in case the mobile user is in soft handover, the transmit power of each BTS needs to be regarded for obtaining the resource consumption. Due to power imbalance between the links this can be a non-trivial task. This will become a special problem in case a DCH (dedicated channel) is in soft handoff, while the associated DSCH (down link shared channel) is transmitted from one cell, only. Finally, in case the mobile user wants to move from URA_PCH (user equipment state, where no dedicated connection exists) state to CELL_DCH (user equipment state, where a dedicated connection exists (on DCH)) state no radio link exists and, hence, a measurement of the current transmit power is not available for that user.

These and other disadvantages have lead to the object of the present invention to provide especially a method and an apparatus which allows to obtain the resource consumption, and/or to provide load control independent on the state the mobile user is in.

It is a further object of the invention that the obtained resource consumption provides a sufficient accuracy for the load control, especially such that it is provided that any system overload can be prevented.

SUMMARY OF THE INVENTION.

The inventive solution is obtained by a method for estimating radio resource consumed by a service, an apparatus, an overload control method and a scheduling method according to the features of claims 1, 8, 9 and 10.

Preferred and/or advantageous embodiments or refinements are subject of the respective dependent claims.

Accordingly, the invention proposes a method for estimating the radio resource consumption consumed by a service provided between nodes and user equipment (UE), particularly in a code-division multiple-access (CDMA) network, and especially for load control, comprising the steps of: extracting a first parameter from a common pilot channel (CPiCH) representing the ratio of received energy per chip to the total received power spectral density ($E_c/I_{0\ CPiCH\ i}$) of user #i and/or a second parameter representing the transmitted power of the common pilot channel ($P_{CPiCH}$), assigning said first and/or said second parameter to a third parameter such that the third parameter represents the radio resource consumption ($C_i$) of user #1 of the service.

It is one of the great advantages of the present invention that the resource consumption, which is a measure representing the ratio between the required transmitted power ($P_i$) and the maximum allowed power ($P_{max}$) in a cell, is assigned to or approximated on the basis of easy available parameters from the common pilot channel. The pilot channel is a base-to-mobile forward-link channel which is modulated only by the pilot PN (pseudo noise) spreading codes common to all signals transmitted from a given base station.

Moreover, it is the achievement of the inventors that they were able to show that by applying such an assignment and/or approximation on overload control functionality resource saving systems or methods for load control can be established without sacrificing a secure protection against overload.

According to the invention there are several ways to acquire the first parameter, i.e. the ratio of received energy per chip to the total received power spectral density. This could be either done by way of requesting a dedicated $E_C/I_{0\ CPiCH\ i}$ measurement from the user equipment and/or by making use of values of the first parameter measured in the course of other network functionality, since, for example, the parameter is also used by the handover functionality. Yet, in a most preferred embodiment a dedicated $E_c/I_{0\ CPiCH\ i}$ measurement is requested from the user equipment after a defined timer event, whereby the timer is started after having received che last measurement The latter method takes into consideration both an initiation of a specific measurement and the use of already available values of the parameter. Therefore, on the one side, since the parameter is regularly updated, a sufficient accuracy of the parameter value can be guaranteed and on the other the amount of signaling overhead due to additional requests can be kept low.

With regard to one possible embodiment the assignment comprises a deriving of a parameter representing a quality of service measure ($E_b/N_t$), a parameter representing a chip rate(W) of the network and/or a parameter representing a data bit rate ($R_b$) and/or a parameter representing a maximum allowed power ($P_{max}$) in the cell. These terms can be easily extract, because they are either given by the traffic profile or by the quality of service requirement of the service. Another term that plays an important role, and which can be favorably easy determined, in the assignment or approximation is the transmitted power of the common pilot channel $P_{CPiCH}$. Highly advantageously, on the basis of these terms the load, being normally determined according to the formula:

$$\frac{P_i}{P_{max}} = \frac{E_b}{N_t} \cdot \frac{R_b}{W} \cdot \frac{I_{effi}}{h_i} \cdot \frac{1}{P_{max}},$$

can be well approximate by the following equation:

$$\frac{P_i}{P_{max}} \approx \frac{E_b}{N_t} \cdot \frac{R_b}{W} \cdot \frac{P_{CPiCH}}{E_c/I_{0\ CPiCH\ i}} \cdot \frac{1}{P_{max}},$$

whereby the ratio between the effective interference $I_{effi}$ and the pathloss $h_i$ of user #i, which is not specified in current 3GPP (third generation partnership project) UMTS standard, is replaced by the term

$$\frac{P_{CPiCH}}{E_c/I_{0\ CPiCH\ i}},$$

which can be advantageously directly determined on the basis of common pilot channel information, as described above.

In accordance with another positive aspect of an embodiment of the invention the assignment comprises a setting of a set of third parameters representing the radio resources consumption of different services in different regions of a cell and/or at different data rates. In this respect the setting encompasses a determining of subsets of third parameters for different services, whereby the subsets could depend on cell regions and/or data rates etc. Regularly, the subset determination comprises a selecting step. Within this step the appropriate subset comprising the appropriate resource consummations for specific services and for a defined region is selected depending on at least one defined threshold for said first parameter and/or for said data rate in the course of a $E_c/I_{0\ CPiCH}$ measurement. In this regard it should be noted that the resource consumption can vary for different cells. Therefore, it might be necessary to have different sets of third parameters for different cells.

Especially in the case of soft handover extracting the first parameter and/or the selection step comprises a determining of a sum of first parameter of cells the user equipment (UE) is connected to or is going to be connected to. The sum stands for an effective value of the $E_c$ to $I_{0\ CPiCH}$ ratio, on which basis the third parameters of different services in a subset with regard to the threshold are assigned to the respective region.

However, the invention relates not only to a method and an apparatus and/ code-division multiple-access network but also to an overload control method and/or an apparatus encompassing means for carrying out the overload method, wherein in a first mode admission control for new services is provided comprising the steps of: measuring of the power lead ($P_{total}/P_{max}$), determining of the resource consumption according to one of claims 1 to 3, evaluating the sum of the power load and the resource consumption by means of an admitting threshold, deciding about admittance of the new service, and/or wherein in a second mode congestion control is provided comprising the steps of: extracting the power load and/or the resource consumption with respect to a defined threshold, selecting the service or services to be dropped and/or to be adapted in transmission rate from the set as determined according to one of the claims 4 to 7.

Moreover, it is provided by the invention a scheduling method, especially in a CDMA network, wherein the parameter representing the resource consumption ($C_i$) is determined according to one of claims 1 to 7.

BRIEF DESCRIPTION OF THE DRAWING.

The invention together with additional features and advantages thereof will be best understood from the following description.

It is shown:

Fig. 1 a flow chart of the decision algorithm according to the inventive admission control method
Fig. 2 a flow chart of the decision algorithm according to the inventive congestion control method
Fig. 3 a flow chart of a congestion control functionality with regard to rate adaption.
Fig. 4 the incorporation of the inventive specifying method of the resource consumption into a scheduling functionality for overload control.

DETAILED DESCRIPTION OF THE INVENTION.

In CDMA (code-division multiple-access), the consumed resource of a certain user service is directly related to the transmit power, which must be used for the specific connection. The required transmit power $P_1$, which is required to fulfil the QoS (quality of service) requirements for a specific user #i can be written as

$$P_i = \frac{E_b}{N_t} \cdot \frac{R_b}{W} \cdot \frac{I_{effi}}{h_i}$$   equation 1.

The parameters in this equation are as follows:

- $E_b/N_t$: The required data-bit-energy to effective-noise density ratio of the user #i. This is mainly determined by the requested QoS of the service in terms of e.g. BER (bit error rate), delay, etc.
- $R_b$: The data bit rate of the service.
- W: The chip rate of the network, in UMTS W = 3.84 MChip/s.
- $I_{effi}$ and $h_i$: The effective interference and the pathloss at user #i, respectively. $I_{effi}$ includes all impacts such as orthogonality between the users of the own cell, interference from other cells, and the thermal noise at the mobile receiver.

While the first terms are directly given from the traffic profile and the QoS requirement of the service, the last term $I_{effi}/h_i$ must be determined from a certain measurement. The first solution would be to directly measure $P_i$ in the BTS (base transceiver station or nodeB). However, as stated before, problems can occur in case of soft handoff or when the mobile station has no connection currently active, e.g. when the mobile user is in the URA_PCH (user equipment state, where no dedicated connection exists) state as specified in the current 3GPP standards. Secondly, a direct measure of $I_{effi}/h_i$ is not specified in current 3GPP UMTS standard.

To overcome this the following highly advantageous approximation is used according to the invenion:

$$\frac{I_{effi}}{h_i} \approx \frac{P_{CPiCH}}{E_c/I_{0\ CPiCH\ i}}$$   equation 2

Now, the additional terms are as follows:

- $P_{CPiCH}$: This is the transmit power of the Common Pilot Channel (CPiCH). The value Of $P_{CPiCH}$ is set by the RNC (radio network controller) and hence, known to load control.

- $E_c/I_{0\,CPiCH\,i}$: This is the ratio of the received energy per chip to the total received power spectral density on the CPiCH as seen from user #i. The value of $E_c/I_{0\,CPiCH\,i}$ can be obtained by a UE (user equipment) measurement according to the recent 3GPP UMTS standard.

The resource *consumption in percent* % is then given by e.g. dividing the required transmit power by the maximum allowed power, which is also set by the RNC (radio network controller) , with *consumption* = $P_i/P_{max}$ [%] . Substituting equation 2 into equation 1 the following basic definition of the resource consumption can be received:

$$resource\ consumption = \frac{P_i}{P_{max}} \approx \frac{E_b}{N_t} \cdot \frac{R_b}{W} \cdot \frac{1}{E_c/I_{0\,CPiCH\,i}} \cdot \frac{P_{CPiCH}}{P_{max}} \qquad \text{equation 3}$$

Hence, from equation 3 the resource consumption can be determined from service specific values ($E_b/N_t$, $R_b$) and from a measurement of the interference situation at the UE ($E_c/I_{0\,CPiCH\,i}$).

Because $E_c/I_{0\,CPiCH}$ does not account for the effects of orthogonality between the users of the own cell (i.e. $I_{0\,CPiCH} \geq I_{effi}$), the approximation of equation 3 can lead to a higher estimated resource consumption than what is effectively used in reality. However, this is not a real problem, because now the following strategy can be used:

- In case of high $E_C/I_0$ CPiCH measurement it can directly be concluded, that the resource consumption is low.
- In case of low $E_C/I_0$ CPiCH it cannot be concluded, that the resource consumption is high, too. In fact, the resource consumption might be low in this case as well. However, when always assuming high resource consumption the network can be efficiently protected against overload. As a drawback, this might lead to some conservative decisions in case the real consumption is lower than the estimated one.

The measurement values for $E_c/I_{0\,CPiCH}$ can be obtained by the following ways:

- The first way is to request dedicated $E_c/I_{0\,CPiCH}$ measurements from the UE (user equipment) when the resource consumption shall be determined. This is the most accurate way to obtain actual results. However in some cases a regular measurement would be necessary. Then, periodic reporting should be used, which in turn might lead to a high amount of signalling overhead on the air-interface.
- The second way is to use the currently available results from the $E_c/I_{0\,CPiCH}$ reporting, which are also used by the handover control functionality. In this case, measurement reports are sent from the UE to the RNC as specified for handover control. By using this method, no additional signalling overhead occurs, but the results might be outdated in case no measurement report has been triggered for a certain while. In case of moving from idle mode or URA_PCH (user equipment state, where no dedicated connection exists) state to CELL_DCH (user equipment state, where a dedicated connection exists on dedicated channel) state, where also the resource consumption is needed, the $E_c/I_{0\,CPiCH}$ measurements are included in the first message on RACH (random access channel).
- To overcome the problem with eventually out-dated measurement results it is proposed to enhance the second method by adding an additional timer event, where a timer will be started after receiving the last measurement. When this timer has expired, a new measurement report is requested from the UE in case the resource consumption is to be estimated. With this solution, the accuracy can be guaranteed compared to the second method while by proper setting of the timer (in the range of some seconds) the additional signalling overhead could be kept low in comparison with the first method.

**Preferred Embodiment #1:**

One advantageous application of the improved method is the load control on the UMTS dedicated channel (DCH). Here, the resources are allocated/reconfigured using relatively slow layer 3 RRC signalling. Therefore, only a limited set of different services & data rates would be used. In this case, the direct calculation of the resource consumption is not necessary. To make the method more efficient the application of a table with a limited set of discrete resource consumption values is proposed. An example for such a table is given below.

| | $E'_c/I_{0\,CPiCH}$ region 1 | $E'_c/I_{0\,CPiCH}$ region 2 |
|---|---|---|
| service #1 | 5% | 15% |
| service #2 | 20% | 50% |
| service #3 | 30% | 60% |

This table is stored and maintained by an operation and maintenance (OAM) entity

The resource consumption values in the table depend on the one hand on the type of service, that has been requested in terms of the data rate and required QoS (bit error ratio, delay, etc.). This is regarded by the different rows in the allocation table (service #1, #2 and #3 in this example). On the other hand, the resource consumption strongly depends on the environment conditions of the specific user. This is regarded by the different columns in the allocation table.

The definition of the two regions in this example is as follows:

- If the $E'_c/I_{0\ CPiCH} \geq$ thr_CPiCH, then use region 1. This is the case, when the mobile user is located at the centre of the cell, and the resource consumption of that user would be low.
- If the $E'_c/I_{0\ CPiCH} <$ thr_CPiCH, then use region 2. This is the case, when the mobile user is located at the edge of the cell, and the resource consumption of that user would be high.

Because on DCH (dedicated channel), the UE (user equipment) might be in soft handover, an effective $E'_c/I_{0\ CPiCH}$ will be calculated using the following criteria:

- When the UE is not in soft handoff, then let $E'_c/I_{0\ CPiCH} = E_c/I_{0\ CPiCH\ j}$, which is the reported value for the CPiCH of the cell #j, the UE is connected to.
- When the UE is in soft handoff, then let

$$E'_C/I_{0\ CPiCH} = \sum_{j\,\in\,activeset} \left( E_C/I_{0\ CPiCH\ j} \right) ,$$

where $E_C/I_{0\ CPiCH\ j}$ are the reported values for all CPiCH of the cells #j, the UE is connected to or going to be connected to. The set of resource consumption values of the table is obtained either by a measurement of the behaviour of the specific service in the specific environment or by estimation techniques using e.g. the formulas, which are given above, and are regularly updated in the course of the $E_c/I_{0\ CPiCH}$ measurement (see above).

The setting of the threshold thr_CPiCH and the choice of the resource consumption values (percentages) shall be done according to the conservative criteria that the network must not go into overload due to inaccurate resource consumption estimates. Therefore, resource consumption values are used for the worst case scenario. This ensures that in certain scenario the real resource consumption is never higher than the estimate in the table. This method effectively avoids overload at the cost that sometimes the resource consumption is overestimated.

From equation 3 follows that the resource consumption depends on the ratio between the power of the CPiCH $P_{CPiCH\ j}$ and the maximum allowed power $P_{maxj}$ of that cell #j. Therefore it could be necessary to use individual tables and thresholds for each cell, depending on the ratio $P_{CPiCH\ j}/P_{maxj}$. Furthermore, the tables could be varied dynamically in the OAM entity regarding, e.g. varying traffic profiles during different times on a daily, weekly or monthly base.

As compared to the given example it is also possible to have more than two regions for $E'_c/I_{0\ CPiCH}$, which offers a higher degree of granularity regarding the environment situation. Furthermore, multiple entries for the resource consumption value of a specific service can be made to account for different data rates of the same service type. The following applications of load control methods can make use of the proposed resource consumption allocation algorithm:

1. *Admission Control*

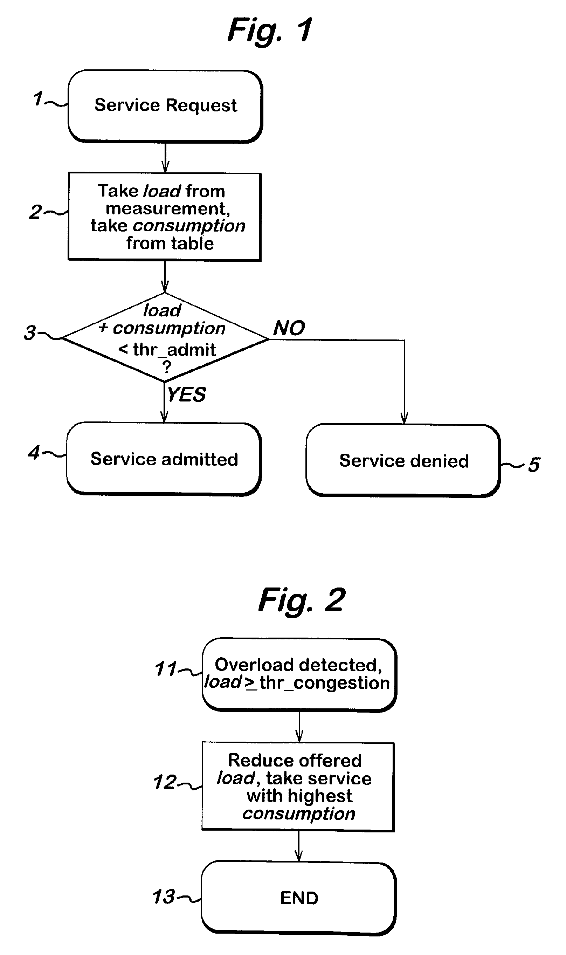

This application is illustrated in figure 1. When a request for establishing a new service has been arrived in the system (1.), the admission control functionality firstly takes an estimate of the current system *load e.g.* by a measurement of the total transmitted power $P_{total}$ in one cell with *load* = $P_{total}/P_{maxj}$. Then, it takes the resource *consumption* from the table according to the requested service and the measurement results for $E'_c/I_{0\ CPiCH}$ (2.). A simple algorithm checks the following criteria (3.):

- *If load + consumption* < thr_admit, then the new service request can be granted (4.).
- *If load + consumption* $\geq$ thr_admit, then the new service request must be rejected (5.).

In this application, thr_admit is the admission threshold, which is set according to the current loading and environment situation. The algorithm can be performed iterative in order to support negotiation of the data service. For low data rate applications, such as RRC (radio resource control) signalling, no special resource consumption is specified. Because this service consumes only a few resources, a simple check of the load against thr_admit is sufficient.

*2. Congestion Control*

The example for a congestion control procedure using the proposed method can be found in figure 2. The congestion control functionality regularly monitors the current system load and cheeks it against the congestion threshold thr_congestion, which is usually set higher than the admission threshold thr_admit. When congestion control detects an overload situation (11.), i.e. when *load* ≧ thr_congestion, then the system must be brought back to a stable state. This is usually done by lowering the offered traffic of the system. Besides some a-priori given priorities the resource consumption table can be used to decide, which user/service must reduce its offered load. For example, the user with the highest resource consumption can be forced to lower his offered data rate, because he has the most effect onto the system loading (12.).

*3. Data Rate Adaptation*

In some situations it might be reasonable to limit the resource consumption of a single user, e.g. in order to avoid an overload situation with a single user. In this case, data rate adaptation functionality performs regularly a check of the resource *consumption* (taken from the consumption table) and compares it against a specific threshold thr_consumption:

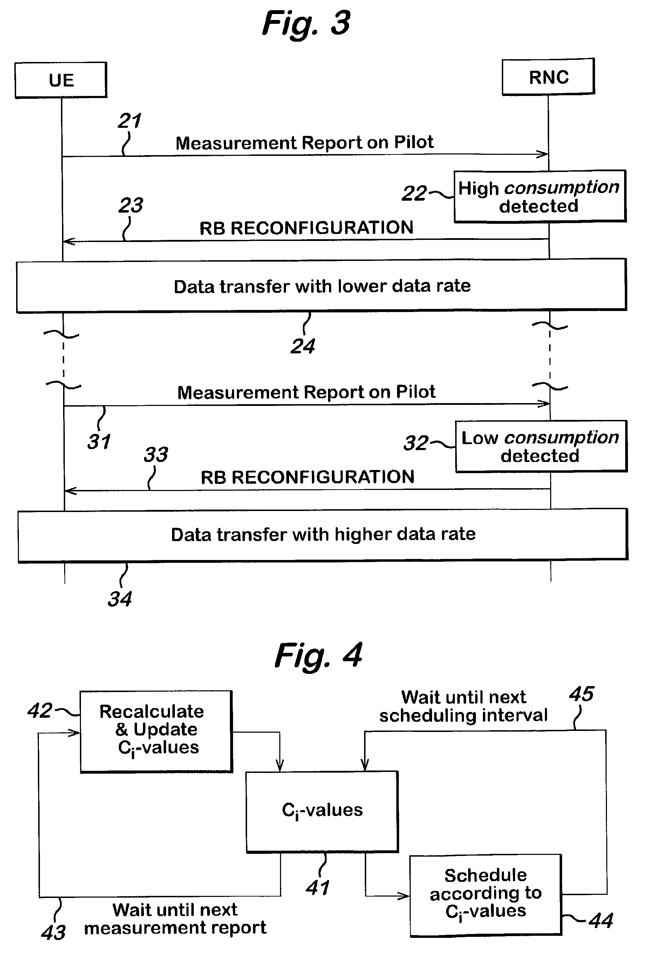

- Reduce the data rate in order to lower the resource consumption: This scenario is shown in the upper part of figure 3. It occurs e.g. when the UE moves from the centre of a cell towards the cell edges. When the RNC receives a measurement report on a CPiCH (21.), and detects *consumption* ≥ thr-consumption (22.), it reconfigures the radio bearer (RB) by sending a radio bearer reconfiguration message (23.). After that, the data are transferred now with a lower data rate (24.).
- Increase of the data rate: This scenario is depicted in the lower part of figure 3. It occurs e.g. when the UE moves back from the cell edges towards the centre of a cell. When the RNC receives a measurement report on a CPiCH (31.), and detects *consumption* < thr_consumption - hysteresis (32.), it reconfigures the radio bearer (RB) by sending a radio bearer reconfiguration message (33.). After that, the data are transferred now with a higher data rate (34.).

A hysteresis shall be used in this case to avoid toggling between increase and decrease of the data rates. The threshold thr_consumption can be chosen according to the specific service and the current load situation of the network. With this resource consumption limit the operator is able to design a network enabling high data rates at the centre of the cells, while keeping a higher coverage for lower data rates at the cell edges. The improved method of determining the resource consumption can also be used for other resource allocation methods.

**Preferred Embodiment #2**

On common channels, such as the DSCH, the overload control functionality on the basis of the inventive assignment can be incorporated into the scheduling function. In contrast to the relatively slow processes on DCH, the granularity of the data rates and the scheduling time on DSCH is much finer. In this case the usage of a table with discrete resource consumption values would lead to inefficient scheduling results.

Therefore, it is proposed to support the scheduling on DSCH by the direct calculation of the resource consumption from the measurement result. According to equation 3 the following formula is proposed:

$$\frac{P_i}{P_{max}} \approx \frac{E_b}{N_t} \cdot \frac{R_b}{W} \cdot \frac{1}{E_c/I_{0\ CPiCH\ i}} \cdot \frac{P_{CPiCH}}{P_{max}} = C_i \cdot R_{bi} \qquad\qquad \text{equation 4}$$

Because a DSCH cannot go into soft handoff, only the $E_c/I_{0\ CPiCH}$ and $P_{CPiCH}$ from the radio link, the DSCH is assigned to (usually the strongest link), have to be regarded.

The principle is depicted in figure 4. The central part of the advanced scheduling function is an element, where the $C_i$-values of each user that is associated to the DSCH are stored (41.). The usage is as follows:

- When ever a new measurement of $E_c/I_{0\ CPiCH}$ for one user #i arrives at the RNC the $C_i$ value is recalculated and updated (42.) according to equation 4 with

$$C_i = K \cdot \frac{E_b}{N_t} \cdot \frac{1}{W} \cdot \frac{P_{CPiCH}}{E_c/I_{0\ CPiCH\ i}} \cdot \frac{1}{P_{max}}.$$

After that, the updating function waits until the next measurement report arrives (43.). This process takes usually some seconds. The scaling factor $K \leq 1$ takes into account the impact of e.g. the orthogonality onto lower resource consumption. Its value has to be chosen according to the before mentioned principle, that the network overload due to wrong estimation of the resource consumption must be avoided.

- At every scheduling interval the scheduler decides on each data rate $R_{bi}$ according to the $C_i$ values by using certain allocation policies and decision criteria (44.). After that, the scheduling function waits until the next scheduling interval starts (45.). The exact scheduling function is out of the scope of this application. The duration of the scheduling interval is usually in the order of some 10msecs to some 100msecs, which is usually at least one degree faster, than the updating, interval.

By using the proposed calculation method the problem with estimating the resource consumption on the DSCH, when the DCH is in soft handoff can be overcome.

## Claims

1. A method for estimating radio resource consumption consumed by a service provided between nodes and user equipment (UE), particularly in a code-division multiple-access (CDMA) network, and especially for load control, comprising the steps of: extracting a first parameter from a common pilot channel (CPiCH) representing the ratio of received energy per chip to the total received power spectral density ($E_C/I_{0\ CP*iCH}$) and/or a second parameter representing the transmitted power of the common pilot channel ($P_{CPiCH}$), assigning said first and/or said second parameter to a third parameter such that the third parameter represents the radio resource consumption of the service ($P_i/P_{max}$, $C_i$).

2. The method as claimed in claim 1, wherein said first parameter is extracted by way of requesting a dedicated $E_c/I_{0\ CPiCH}$ measurement from the user equipment and/or by making use of values of the first parameter measured in the course of other network functionality (handover control functionality) and/or by way of requesting a dedicated $E_c/I_{0\ CPiCH}$ measurement from the user equipment after a defined timer event, whereby the timer is started after having received the last measurement.

3. The method as claimed in claim 1 or 2, wherein the assignment comprises a deriving of a parameter representing a quality of service measure ($E_b/N_t$), a parameter representing a chip rate(W) of the network and/or a parameter representing a data bit rate ($R_b$) and/or a parameter representing a maximum allowed power ($P_{max}$) in the cell and/or a parameter representing transmitted power of the common pilot channel ($P_{CPiCH}$).

4. The method as claimed in claim 1 to 3, wherein the assignment comprises a setting of a set of third parameters representing the radio resources consumption of different services in different regions of a cell and/or at different data rates and/or different cells.

5. The method as claimed in claim 4, wherein said setting encompasses a determining of subsets of third parameters for different services, whereby the subsets depend on cell regions and/or data rates.

6. The method as claimed in claim 4 and 5, wherein the assignment comprises a selecting of one of the subsets depending on at least one defined threshold for said first parameter and/or for said data rate.

7. The method as claimed in any of the preceding claims, wherein extracting the first parameter comprises a determining of a sum of first parameter of cells the user equipment (UE) is connected to or is going to be connected to.

8. An apparatus and/or a code-division multiple-access (CDMA) network for carrying out a method according to any of the preceding claims, comprising: means for extracting a first parameter from a common pilot channel (CPiCH) representing the ratio of received energy per chip to the total received power spectral density ($E_c/I_{0\ CPiCH\ i}$) and/or a second parameter representing the transmitted power of the common pilot channel ($P_{CPiCH}$), means for assigning said first and/or said second parameter to a third parameter such that the third parameter represents the radio resource consumption of the service ($P_i/P_{max}$, $C_i$).

9. An overload control method and/or an apparatus encompassing means for carrying out the method, wherein in a first mode admission control for new services is provided comprising the steps of: measuring of the power load ($P_{total}/P_{max}$), determining of the resource consumption according to one of claims 1 to 3, evaluating the sum of the power load and the resource consumption by means of an admitting threshold, deciding about admittance of the new service, and/or wherein in a second mode congestion control is provided comprising the steps of: extracting the power load and/or the resource consumption with respect to a defined threshold, selecting the service or services to be dropped and/or to be adapted in transmission rate from the set as determined according to one of the claims 4 to 7.

10. Scheduling method, especially in a CDMA network, wherein the parameter representing the resource consumption ($C_i$) is determined according to one of claims 1 to 7.

## Fig. 1

## Fig. 2

# Fig. 3

| UE | | RNC |
|---|---|---|

*21* Measurement Report on Pilot →

*22* — High *consumption* detected

*23* ← RB RECONFIGURATION

Data transfer with lower data rate

*24*

Measurement Report on Pilot →

*31*

*32* — Low *consumption* detected

*33* ← RB RECONFIGURATION

Data transfer with higher data rate

*34*

# Fig. 4

*42* — Recalculate & Update $C_i$-values

Wait until next scheduling interval *45*

$C_i$-values

*41*

Schedule according to $C_i$-values

*44*

*43* Wait until next measurement report

**European Patent Office**

**EUROPEAN SEARCH REPORT**

Application Number

EP 02 25 3961

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 393 276 B1 (VANGHI VIERI) 21 May 2002 (2002-05-21) * column 6, line 60 - column 7, line 50 * * claims 2,3,10,12 * ----- | 1-10 | H04B7/005 H04Q7/38 |

TECHNICAL FIELDS SEARCHED (Int.Cl.7)

H04B
H04Q

The present search report has been drawn up for all claims

| Place of search | Date of completion of the search | Examiner |
|---|---|---|
| THE HAGUE | 24 March 2003 | Standaert, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 25 3961

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2003

| Patent document cited in search report | | Publication date | Patent family member(s) | | Publication date |
|---|---|---|---|---|---|
| US 6393276 | B1 | 21-05-2002 | AU | 3727601 A | 24-07-2001 |
| | | | WO | 0152425 A2 | 19-07-2001 |
| | | | US | 2002187801 A1 | 12-12-2002 |
| | | | US | 2002155854 A1 | 24-10-2002 |

EPO FORM P0459

For more details about this annex : see Official Journal of the European Patent Office, No. 12/82